# EUROPÄISCHE PATENTSCHRIFT

(11) **EP 2 210 263 B1**
(45) Veröffentlichungstag und Bekanntmachung des Hinweises auf die Patenterteilung: **20.06.2012**
(21) Anmeldenummer: 08848768.1
(22) Anmeldetag: 21.10.2008
(51) Int. Cl.: H01H 23/00, H05B 37/02

(54) **STEUERUNG VON BELEUCHTUNGSGERÄTEN**
CONTROL OF ILLUMINATION DEVICES
COMMANDE D'APPAREILS D' ECLAIRAGE

(30) Priorität: 12.11.2007 DE 202007015713 U
(43) Veröffentlichungstag der Anmeldung: 28.07.2010
(73) Patentinhaber: OSRAM AG, 81536 München (DE)
(72) Erfinder: DELLIAN, Harald, 83533 Edling (DE)
(86) Internationale Anmeldenummer: PCT/EP2008/064169
(87) Internationale Veröffentlichungsnummer: WO 2009/062816

(56) Entgegenhaltungen:
- CH-A- 297 156
- DE-A1- 4 429 950
- DE-U- 1 982 485
- US-A- 3 204 070
- US-A- 3 382 339
- US-A- 5 051 607
- US-A- 5 239 205
- US-B1- 6 700 225

## Beschreibung

### Technisches Gebiet

Diese Erfindung bezieht sich auf die Steuerung von Beleuchtungsgeräten durch kurze Versorgungsleitungsunterbrechungen.

### Stand der Technik

Es ist grundsätzlich bekannt, beim Ein- und Ausschalten von Lampen und Leuchten kurze Netzunterbrechungen zur Ansteuerung einer Erkennungsschaltung im elektronischen Vorschaltgerät einer Lampe und zum Umschalten zwischen Betriebszuständen zu nutzen. Diese Betriebszustände können verschiedene Dimmstufen oder der Betrieb verschiedener Lampen in einer Leuchte sein.

Beispielsweise kann der Benutzer nach dem Einschalten kurz aus- und sofort wieder einschalten, um dadurch von einer niedrigen in eine hohe Dimmstufe und bei einem erneuten gleichartigen Vorgang wieder zurückzuschalten.

In US 3382339 wird ein Schalter mit den im Oberbegriff des Anspruchs 1 angeführten technischen Merkmalen beschrieben.

### Darstellung der Erfindung

Aufgabe der vorliegenden Erfindung ist es, für verbesserte Möglichkeiten bei dieser Form von Steuerung von Beleuchtungsgeräte zu sorgen.

Diese Aufgabe wird gelöst durch einen Schalter zur Erzeugung von kurzen Versorgungsleitungsunterbrechungen beim Einschalten mit Kontaktelementen und einem Betätigungselement zum Öffnen und Schließen von elektrischen Kontakten zwischen den Kontaktelementen, wobei ein erstes Kontaktelement elastisch gelagert ist und beim Schließen eines Kontaktes über das erste Kontaktelement elastisch so ausgelenkt werden kann, dass der Kontakt nach anfänglichem Schließen durch die elastische Auslenkung wieder geöffnet wird, dadurch gekennzeichnet, dass das Betätigungselement ein bewegliches zweites Kontaktelement bewegen kann, das zweite Kontaktelement das elastisch gelagerte erste Kontaktelement auslenken kann und das erste Kontaktelement im nicht elastisch ausgelenkten Zustand ein drittes Kontaktelement (3, 6, 23) kontaktiert, von dem es bei der elastischen Auslenkung wegbewegt werden kann.

Die Erfindung bezieht sich zusätzlich auf diesen Schalter beinhaltende Beleuchtungsinstallationen mit mindestens einem Beleuchtungsgerät, wie in den Ansprüchen 12 und 13 angegeben.

Bevorzugte Ausgestaltungen sind in den abhängigen Ansprüchen angegeben. Bei der folgenden Erläuterung der Erfindung und dieser Ausgestaltungen wird zwischen den verschiedenen Anspruchskategorien nicht mehr im Einzelnen unterschieden, wobei sich jedoch die einzelnen Merkmale jeweils auf alle Anspruchskategorien beziehen.

Die Grundidee der Erfindung liegt darin, einen Schalter zu schaffen, bei dem die kurze Netzunterbrechung in einfacherer Weise bewerkstelligt werden kann, insbesondere ohne wieder vollständig in die Ausschaltposition zurückkehren und dann in die Einschaltposition schalten zu müssen. Hierzu sieht die Erfindung eine elastische Lagerung eines der Kontaktelemente vor, das hier als erstes Kontaktelement bezeichnet wird. Durch eine elastische Auslenkung dieses ersten Kontaktelements beim Schließen des elektrischen Kontakts zwischen diesem und einem zweiten Kontaktelement und damit der Leitung soll der gerade geschlossene Kontakt in Folge der Auslenkung wieder geöffnet werden. Im Anschluss daran kann selbsttätig oder durch einen rückführenden Betätigungsvorgang des Benutzers der geschlossene Zustand der Leitung wiederhergestellt werden, ohne dass der Benutzer den Schalter für die Leitungsunterbrechung in die Ausschaltposition zurückführen musste. Die elastische Auslenkung ersetzt also die kurzzeitige Rückführung in die Ausschaltposition.

Die elastische Auslenkung kann durch eine über eine bestimmte Position, in der der Kontakt geschlossen ist, hinausgehende Eindrückbewegung hervorgerufen werden, also indem der Benutzer beispielsweise eine Wippenschalterfläche oder eine Druckschalterfläche besonders tief eindrückt.

Das den beschriebenen ersten Kontakt mit dem elastisch gelagerten Kontaktelement vor der kurzen Leitungsunterbrechung herstellende zweite Kontaktelement ist vorzugsweise ein oder das bewegliche Kontaktelement des Schalters, das durch ein Betätigungselement, etwa eine wippenartige Betätigungsfläche eines Wippenschalters, bewegt wird. Vorzugsweise führt das bewegliche zweite Kontaktelement direkt zu der elastischen Auslenkung des ersten, stößt also daran an und übt die (bzw. vermittelt die durch das Betätigungselement aufgebrachte) Kraft zur elastischen Auslenkung aus.

Die elastische Lagerung kann ferner für die Rückstellkraft zur Wiederherstellung des Kontakts genutzt werden. Dazu kann nach Nachlassen der über das Betätigungselement vermittelten Kraft die nun ausreichende Rückstellkraft den geöffneten elektrischen Kontakt wiederherstellen, also das erste und das zweite und ein weiteres drittes Kontaktelement zueinander bringen. Dies kann auch selbsttätig geschehen, ohne dass notwendigerweise die Kraft, die auf das Betätigungselement oder das bewegliche Kontaktelement ausgeübt wird, nachlässt.

Insbesondere kann eine solche selbsttätige Rückstellung durch ein Vorbeigleiten des zweiten Kontaktelements an dem ersten Kontaktelement und dadurch hervorgerufenes Freigeben des ersten Kontaktelements bewirkt werden. Die elastische Rückstellkraft kann dann das freigewordene erste Kontaktelement in eine Kontaktposition zurückbewegen, in der dieses erst wieder in Berührung mit einem anderen Teil des zweiten oder dem dritten Kontaktelement kommt.

Dabei kann es zu Schwierigkeiten durch das Aufprallen des ersten auf das dritte Kontaktelement kommen, die vermieden oder zumindest verbessert werden können, indem das dritte Kontaktelement ebenfalls elastisch gelagert ist und beim Aufprallen etwas nachgibt. Damit können Prellvorgänge und unbeabsichtigte weitere Unterbrechungen der Leitung vermieden werden.

Bei bevorzugten Ausgestaltungen der Erfindung bewegt sich zumindest eines der Kontaktelemente auf einer Bogenbahn. Im Fall des beweglichen Kontaktelements kann dies beispielsweise eine Kreisbogenbahn um eine Drehachse sein. Insbesondere kann das bewegliche Kontaktelement als Wippe ausgestaltet sein.

Bei dem ersten elastisch gelagerten Kontaktelement kann es sich um ein als Feder, insbesondere als Federblech, ausgestaltetes Element handeln. Das den Kontakt tragende Teil dieses ersten Kontaktelements bewegt sich dann ebenfalls auf einer Bogenbahn, wenn ein anderes Ende des Federblechs fest gelagert ist, wobei diese Bogenbahn nicht genau kreisförmig ist.

Auch das bewegliche zweite Kontaktelement kann im Wesentlichen als Blechstück ausgestaltet sein, etwa als Wippe.

Die Bereiche der Kontaktelemente, in denen der elektrische Kontakt geschlossen und geöffnet wird, können mit Vorsprüngen aus geeignetem Material versehen sein, um die Festigkeit gegenüber Lichtbogenerosionen zu verbessern.

Wie bereits eingangs festgestellt, eignet sich der erfindungsgemäße Schalter nicht nur für Beleuchtungsinstallationen, also zum Betrieb verschaltete Lampen oder Leuchten, bei denen verschiedene Dimmstufen durchgeschaltet werden können, sondern auch zum Umschalten zwischen verschiedenen Lampen. Dieses Umschalten kann auch weitere elektrische Verbraucher neben einer Lampe oder allgemeiner einem Beleuchtungsgerät beinhalten, beispielsweise das Umschalten zwischen Klingelfunktion und Beleuchtungsfunktion bei einer Klingelanlage an einer Haustür oder das Betätigen der Leuchte über den Klingelknopf während des Klingelns oder das Umschalten zu und zwischen Funktionen einer Gegensprechanlage.

Die Installation des Schalters betrifft vorzugsweise eine kurzzeitige Unterbrechung der Phasenleitung einer spannungsführenden Leitung im Allgemeinen einschl. Gleichspannungsversorgung. Im Prinzip sind aber auch Verschaltungen denkbar, bei denen beispielsweise der Nullleiter unterbrochen wird und eine geeignete Erkennungsschaltung dies auswertet. Eine solche Erkennungsschaltung kann Bestandteil eines elektronischen Vorschaltgeräts sein, aber auch getrennt davon vorgesehen sein, um beispielsweise über ein Relais Lampen anzusteuern, die kein Vorschaltgerät benötigen.

### Kurze Beschreibung der Zeichnungen

Im Folgenden wird die Erfindung anhand von Ausführungsbeispielen näher veranschaulicht. Die dabei offenbarten Merkmale beziehen sich, wie eingangs bereits erwähnt, auf alle Anspruchskategorien und können im Übrigen auch in anderen als in den dargestellten Kombinationen erfindungswesentlich sein.
- Figur 1: zeigt eine Prinzipdarstellung eines konventionellen Wippenschalters nach dem Stand der Technik.
- Figur 2 und 3: zeigen einen erfindungsgemäßen Wippenschalter in vergleichbarer Darstellung.
- Figur 4: zeigt schematisch den Aufbau verschiedener Kontaktelemente eines erfindungsgemäßen Wippenschalters nach einem zweiten Ausführungsbeispiel.
- Figur 5 - 8: zeigen vier verschiedene erfindungsgemäße Beleuchtungsinstallationen als weitere Ausführungsbeispiele.

### Bevorzugte Ausführung der Erfindung

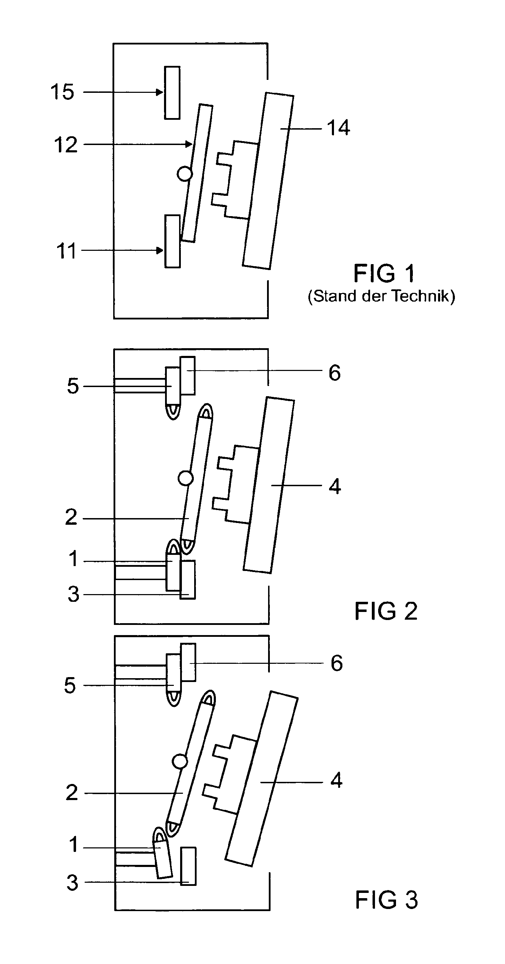

Figur 1 zeigt eine schematische Skizze eines Wippenschalters mit einer wippenartigen Betätigungsfläche 14, die in nicht im Einzelnen dargestellter Weise um eine Drehachse kippbar ist. Dadurch kann sie von der dargestellten Position, in der die Betätigungsfläche in dem dargestellten Schnitt im Wesentlichen von rechts oben nach links unten weist, in eine Position geschaltet werden, in der sie von links oben nach rechts unten weist. Damit wiederum wird die Position eines ebenfalls wippenartigen Kontaktelements 12 verändert, so dass zwischen einem Kontakt mit einem unteren Kontaktelement 11 und einem oberen Kontaktelement 15 hin- und hergeschaltet werden kann.

In der Regel sind dabei die Endlagen des Bewegungsweges der Betätigungsfläche 14 und des Kontaktelements 12 stabil und die Lagen dazwischen instabil. In anderen Worten: Der Schalter befindet sich im Ruhezustand grundsätzlich in einer der beiden Endpositionen.

Üblicherweise werden an das bewegliche Kontaktelement 12 eine eingehende Phasenleitung und an die beiden feststehenden Kontaktelemente 11 und 15 zwei ausgehende geschaltete Phasenleitungen angeschlossen, zwischen denen hin-und hergeschaltet werden kann. Alternativ werden solche Wechselschalter in der Praxis häufig auch für andere Anwendungen eingesetzt, in denen einer der beiden Ausgänge offen bleibt, beispielsweise der dem feststehenden Kontaktelement 15 entsprechende. Dann wäre der Schalter in der Position aus Figur 1 im eingeschalteten Zustand und in der alternativen Position im ausgeschalteten.

Bei den an sich bekannten Anwendungen zur Ansteuerung von Betriebszuständen von Beleuchtungsgeräten durch kurzzeitige Leitungsunterbrechungen muss der Benutzer beispielsweise von der gezeichneten Stellung in die entgegengesetzte Stellung zurückschalten und sofort wieder in die gezeichnete Stellung, um beispielsweise eine Lampe in eine abweichende Dimmstufe zu schalten. Dies kann als lästig empfunden werden, besonders wenn es mehr als zwei Betriebszustände gibt, zwischen denen unterschieden werden soll und die beispielsweise zyklisch durchgeschaltet werden müssen. Alternativ oder zusätzlich kann der Stand der Technik auch deswegen als nachteilig empfunden werden, weil er gewisse Ansprüche an die motorische Kontrolle der betätigenden Hand stellt und bei Menschen mit eingeschränkter Bewegungsfähigkeit der Hand, etwa bestimmten Krankheiten wie Rheuma, Parkinson u. Ä., bei Verbänden der Hand, bei Kleinkindern und in anderen Situationen, praktisch nicht nutzbar ist.

Die Figuren 2 und 3 zeigen das Prinzip eines ersten Ausführungsbeispiels. Hierbei sind die beiden feststehenden Kontaktelemente 11 und 15 ersetzt durch elastisch gelagerte Kontaktelemente 1 und 5. Die horizontalen Balken jeweils links davon sollen die elastische Lagerung darstellen. Diese bilden "erste" Kontaktelemente im bisherigen Sinn und liegen im nicht ausgelenkten Zustand an "dritten" Kontaktelementen 3 und 6 an.

Die Betätigungsfläche ist hier mit 4 beziffert, entspricht aber im Übrigen der Betätigungsfläche 14 aus Figur 1. Sie betätigt ein ebenfalls weitgehend Figur 1 entsprechendes bewegliches Kontaktelement 2, das in der bisherigen Begriffswahl ein "zweites" Kontaktelement bildet. Der elektrische Kontakt besteht in der Darstellung in Figur 2 zwischen dem zweiten Kontaktelement 2 und dem ersten Kontaktelement 1 sowie zwischen diesem und dem dritten Kontaktelement 3, das an die Ausgangsleitung angeschlossen ist.

Figur 3 verdeutlicht, dass die Betätigungsfläche 4 weiter eingedrückt werden kann, etwa beim Bewegen in die in Figur 2 dargestellte Position aus der entgegengesetzten Position. Dabei kann der Benutzer die Betätigungsfläche 4 mit etwas erhöhter Kraft weiter nach innen drücken, was das zweite bewegliche Kontaktelement 2 ebenfalls weiter nach innen drückt und damit die beiden Kontaktelemente 1 und 3 aus der Lage aus Figur 2 heraus trennt, indem das erste Kontaktelement 1 elastisch nach links ausgelenkt wird. Geht man von einem Einschaltvorgang aus, so ist also der in Figur 2 dargestellte Zustand eines elektrischen Schlusses zwischen dem ersten, zweiten und dritten Kontaktelement 1, 2 bzw. 3 nur vorübergehender Art und wird durch eine Situation abgelöst, in der wie in Figur 3 zwar zwischen dem ersten und dem zweiten Kontaktelement 1 bzw. 2 ein elektrischer Kontakt besteht, aber nicht zwischen dem ersten Kontaktelement 1 und dem dritten 3. Damit ist die Netzzuleitung unterbrochen.

Wird die erhöhte Kraft zum Niederdrücken der Betätigungsfläche 4 nur kurz aufgebracht, etwa indem man die Betätigungsfläche 4 nach dem Umschalten gleich loslässt, drückt die elastische Rückstellkraft das erste Kontaktelement 1 zurück in die Anlage an dem dritten Kontaktelement 3 und das zweite bewegliche Kontaktelement 2 in die Position aus Figur 2. Damit ist die Netzzuleitung wieder geschlossen.

Ein ganz analoger Vorgang kann mit den den Kontaktelementen 1 und 3 entsprechenden Kontaktelementen 5 und 6 ablaufen, so dass die grundsätzliche Eignung des Schalters als Ein- und Ausschalter für zwei alternative Ausgänge und als Wechselschalter erhalten bleibt.

Die Halterung der ersten Kontaktelemente 1 und 5 ist hier, wie Figur 3 unten links zeigt, so ausgestaltet, dass sich das erste Kontaktelement bei der Auslenkung mit seiner Kontaktspitze auf einer Bogenbahn bewegt. Die Kontaktspitze des zweiten Kontaktelements bewegt sich auf einer Kreisbahn. Beide gleiten dabei aneinander entlang, weswegen hier Kontaktvorsprünge angedeutet sind, die nicht nur hinsichtlich Funkenerosion aus einem geeigneten Material bestehen, sondern zudem eine gerundete und damit für diesen Gleitvorgang geeignete Form aufweisen.

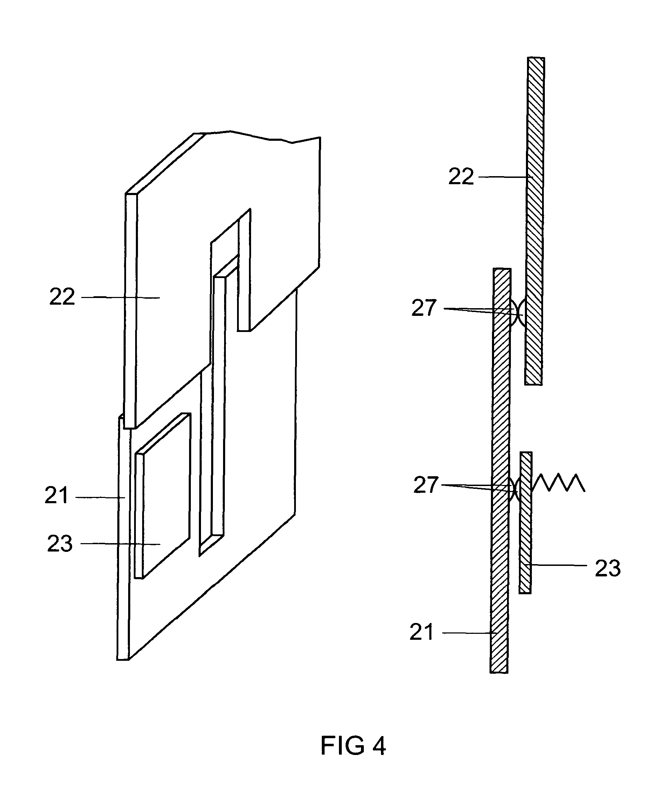

Ein zweites Ausführungsbeispiel zeigt Figur 4 nur als Ausschnitt (entsprechend dem unteren Bereich der Figuren 1 - 3) und in etwas konkreterer Darstellung. Hier sind ein erstes, ein zweites und ein drittes Kontaktelement mit den Bezugszeichen 21, 22 und 23 bezeichnet. Sie sind jeweils als Bleche ausgebildet. Die linke Darstellung zeigt sie in perspektivischer Ansicht, die rechte im Schnitt.

Das zweite Kontaktelement 22 hat, soweit dargestellt, eine im Wesentlichen umgedrehte U-Form, wobei der dargestellte Teil den unteren Teil eines wippenartigen Kontaktelements bedeutet, das ähnlich wie in den Figuren 1 - 3 nach oben spiegelsymmetrisch ausgestaltet ist, also H-förmig.

Das erste Kontaktelement 21 wiederum hat eine aufrechte U-Form mit unterschiedlich langen Schenkeln, wobei der linke vordere gegenüber dem rechten hinteren etwas verkürzt ist. Damit ist der in horizontaler Richtung gesehene Überlapp zwischen dem linken vorderen Schenkel des ersten Kontaktelements 21 und des zweiten Kontaktelements 22 sehr viel kleiner als der zwischen den jeweiligen rechten hinteren Schenkeln.

Das erste Kontaktelement 21 und das dritte Kontaktelement 23 sind jeweils an ihrem unteren Ende in nicht dargestellter Weise fest gelagert und als Federbleche ausgebildet. Hinsichtlich des dritten Kontaktelements 23 ist dies in der rechten Darstellung durch die angedeutete Schraubenfeder symbolisiert. Das dritte Kontaktelement 23 kann natürlich deutlich länger als dargestellt sein.

Auch hier sind hinsichtlich Funkenerosion ausgebildete Vorsprünge vorgesehen, die pauschal mit 27 bezeichnet sind.

Wenn letztlich zwischen dem zweiten Kontaktelement 22 und dem dritten Kontaktelement 23 eine elektrische Verbindung hergestellt werden soll, wird das zweite Kontaktelement 22 in ähnlicher Form wie in den Figuren 2 und 3 in die figürlich dargestellte Position bewegt. Bei einem weiteren Eindrücken einer Betätigungsfläche wird das zweite Kontaktelement 22 über die dargestellte Position hinaus weiter nach links bewegt, wobei der linke vordere Schenkel ab einem gewissen Winkel nicht mehr den linken vorderen Schenkel des ersten Kontaktelements 21 vor sich her drückt und damit von dem dritten Kontaktelement 23 löst, sondern darüber hinweg rutscht. Daraufhin kann das erste Kontaktelement 21 elastisch zurückspringen und wieder einen Kontakt zu dem dritten Kontaktelement 23 herstellen, wobei der Kontakt zwischen dem rechten hinteren Schenkel des zweiten Kontaktelements 22 und dem des ersten Kontaktelements 21 bestehen bleibt. Damit ist also auch dann eine nur kurzzeitige Unterbrechung gegeben, wenn der Benutzer die Betätigungsfläche relativ lang tief eindrückt. Die Unterbrechungszeit hängt im Unterschied zu dem ersten Ausführungsbeispiel nur noch von der Geschwindigkeit des Eindrückens ab, nicht mehr von der Dauer. Nach Freigabe der Betätigungsfläche bewegt sich das zweite Kontaktelement 22 wieder zurück in die Position in Figur 4 und rutscht dabei wieder über den Schenkel des ersten Kontaktelements 21.

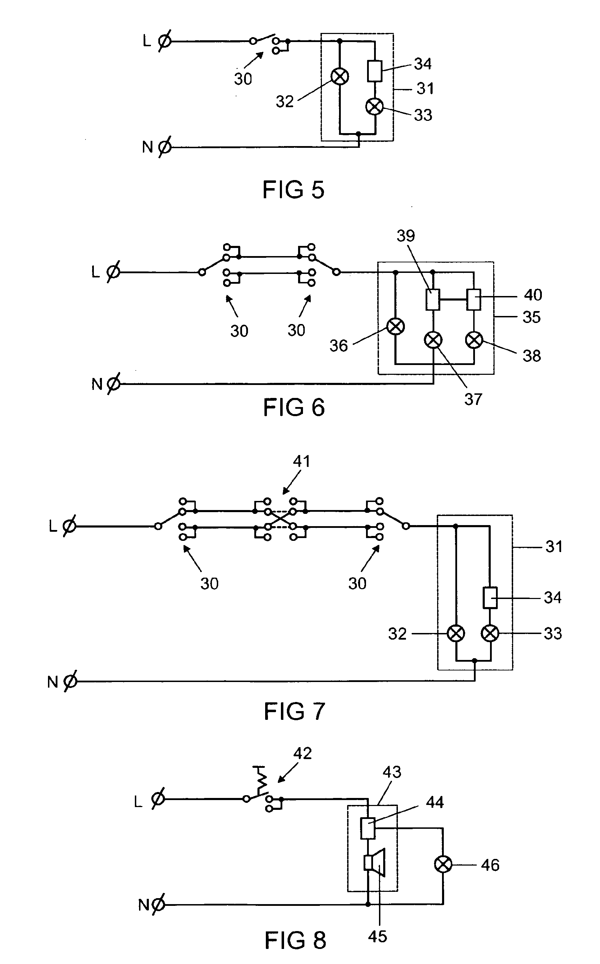

Die Figuren 5 - 8 zeigen verschiedene beispielhafte Beleuchtungsinstallationen zur Illustration von Anwendungsmöglichkeiten des erfindungsgemäßen Schalters. Figur 5 zeigt den Schalter, mit 30 bezeichnet, in der Phasenzuleitung L einer Leuchte 31. Die Leuchte 31 enthält zwei Leuchtmittel 32 und 33 sowie eine Auswerteelektronik 34, die die kurze Netzstromunterbrechung beim Tiefdrücken des erfindungsgemäßen Schalters 30 erkennen kann und vorzugsweise Bestandteil eines Lampenvorschaltgerätes ist. Das Leuchtmittel 32 wird beim Anlegen der Phase immer eingeschaltet, das Leuchtmittel 33 jedoch nur dann, wenn die Auswerteelektronik 34 die kurze Netzunterbrechung erkennt. Man kann dies als Umschalten zwischen Dimmstufen der gesamten Leuchte auffassen. In einer Dimmstufe brennen beide Leuchtmittel, in einer anderen nur eines. Zusätzlich kann natürlich auch zwischen Dimmstufen der Lampen geschaltet werden, wobei sich eine entsprechende "Durchschaltreihenfolge" der Leuchte insgesamt ergibt.

Die Variante aus Figur 6 baut darauf auf und zeigt den erfindungsgemäßen Schalter 30 in gleicher Bauform doppelt als Wechselschalter ausgeführt. Eine Leuchte 35 enthält drei Leuchtmittel 36 - 38 und in den Vorschaltgeräten oder separat zwei Auswerteelektroniken 39 und 40, die miteinander kommunizieren, wie durch den horizontalen Strich angedeutet. Das Leuchtmittel 36 wird immer eingeschaltet. Nach einer ersten kurzen Netzunterbrechung erkennt die Auswerteelektronik 39 dieselbe und steuert das Leuchtmittel 37 an. Gleichzeitig gibt sie die zweite Auswerteelektronik 40 frei, die nach einer weiteren kurzen Netzunterbrechung das zweite Leuchtmittel 38 einschaltet. Bei einer weiteren Ausgestaltung könnte hiernach bei einer weiteren kurzen Netzunterbrechung die erste Auswerteelektronik 39 das erste Leuchtmittel 37 ausschalten und die zweite Auswerteelektronik 40 bei einer vierten kurzen Netzunterbrechung das zweite Leuchtmittel 38. Alternativ könnte auch bei der dritten Netzunterbrechung ein Ausschalten beider Leuchtmittel 37 und 38 erfolgen.

In Figur 7 liegt eine sog. Kreuzschaltung vor. In dieser Kreuzschaltung treten links und rechts erfindungsgemäße Wechselschalter 30 wie in den Figuren 5 und 6 auf. Zusätzlich ist in der Mitte ein ebenfalls an den Kontakten erfindungsgemäß ausgestatteter Kreuzschalter 41 vorgesehen. Die grafische Darstellung deutet bereits seine Funktionsweise an: In einer Schaltstellung verbindet er die eingezeichneten Kontakte über Kreuz (also links oben mit rechts unten und links unten mit rechts oben), in der anderen, gestrichelt dargestellten, Schaltposition sozusagen parallel (also links oben mit rechts oben und links unten mit rechts unten). Man kann sich leicht veranschaulichen, dass damit jede Betätigung eines der Schalter 30, 41 eine Ein- oder Ausschaltbetätigung der gesamten Installation bedeutet. Gleiches gilt für die kurzen Netzunterbrechungen gemäß der Erfindung. Dabei können übrigens, wenn mehr als drei Bedienungsstellen gewünscht sind, auch beliebig mehr Kreuzschälter 41 eingesetzt werden. Die Leuchte 31 rechts entspricht dem Ausführungsbeispiel aus Figur 5.

Schließlich zeigt Figur 8 ein letztes Ausführungsbeispiel, und zwar eine Klingelanlage eines Hauses. Ein erfindungsgemäß ausgestalteter Tastschalter 42 liegt in einem Zweig einer Niedervoltgleichspannungsversorgung. 43 bezeichnet eine mit einer entsprechenden Auswerteelektronik 44 ausgestattete Türklingelanlage, 45 die Klingel selbst und 46 eine Leuchte.

Wird mit dem erfindungsgemäßen Tastschalter 42 eine kurze Netzunterbrechung beim Einschalten erzeugt, erkennt dies die Auswerteelektronik 44 und steuert statt der Klingel 45 eine Türbeleuchtung 46 an. Wird der Taster aber ohne tiefes Drücken betätigt, wird ganz normal mit der Klingel 43 geklingelt. Zusätzlich könnten auch weitere Klingeln und/oder Leuchten vorhanden sein, wodurch sich wieder eine entsprechende Durchschaltreihenfolge ergeben würde.

## Patentansprüche

1. Schalter zur Erzeugung von kurzen Versorgungsleitungsunterbrechungen beim Einschalten mit Kontaktelementen (1, 2, 3, 5, 6, 21, 22, 23) und einem Betätigungselement (4) zum Öffnen und Schließen von elektrischen Kontakten zwischen den Kontaktelementen (1, 2, 3, 5, 6, 21, 22, 23), wobei ein erstes Kontaktelement (1, 5, 21) elastisch gelagert ist und beim Schließen eines Kontaktes über das erste Kontaktelement (1, 5, 21) elastisch so ausgelenkt werden kann, dass der Kontakt nach anfänglichem Schließen durch die elastische Auslenkung wieder geöffnet wird, **dadurch gekennzeichnet, dass** das Betätigungselement (4) ein bewegliches zweites Kontaktelement (2, 22) bewegen kann, das zweite Kontaktelement (2, 22) das elastisch gelagerte erste Kontaktelement (1, 5, 21) auslenken kann und das erste Kontaktelement (1, 5, 21) im nicht elastisch ausgelenkten Zustand ein drittes Kontaktelement (3, 6, 23) kontaktiert, von dem es bei der elastischen Auslenkung wegbewegt werden kann.

2. Schalter nach Anspruch 1, bei dem die elastische Rückstellung der elastischen Lagerung nach dem Öffnen durch die elastische Auslenkung den Kontakt wieder schließt.

3. Schalter nach Anspruch 1 oder 2, bei dem das Betätigungselement (4) zum Schließen des Kontakts über das elastisch gelagerte erste Kontaktelement (1, 5, 21) eingedrückt werden kann und über eine Schließposition, in der der Kontakt geschlossen ist, hinaus eingedrückt werden kann, wodurch das erste Kontaktelement (1, 5, 21) ausgelenkt wird.

4. Schalter nach Anspruch 2 oder 3, bei dem das bewegliche zweite Kontaktelement (22) das elastisch gelagerte erste Kontaktelement (21) auslenken und dabei an diesem vorbeigleiten kann, so dass das erste Kontaktelement (21) elastisch zurückspringt und den Kontakt wieder schließt, bevor das zweite Kontaktelement (22) zurückbewegt wird.

5. Schalter nach Anspruch 4, bei dem das dritte Kontaktelement (3, 6, 23) ebenfalls elastisch gelagert ist, um ein prellungsfreies Schließen nach dem elastischen Zurückspringen zu gewährleisten.

6. Schalter nach einem der vorstehenden Ansprüche, bei dem sich mindestens eines der Kontaktelemente (1, 2, 5, 21, 22, 23) auf einer Bogenbahn bewegt.

7. Schalter nach einem der vorstehenden Ansprüche, zumindest Anspruch 1 oder 2 und 6, bei dem das bewegliche zweite Kontaktelement (2, 22) eine Wippe ist.

8. Schalter nach einem der vorstehenden Ansprüche, bei dem das elastisch gelagerte erste Kontaktelement (21) ein Federblech ist und die elastische Lagerung aus den elastischen Eigenschaften des Federblechs folgt.

9. Schalter nach einem der vorstehenden Ansprüche, zumindest Anspruch 1 oder 2 und 8, bei dem das bewegliche zweite Kontaktelement (22) und das elastisch gelagerte erste (21) Kontaktelement jeweils Blechstücke sind.

10. Schalter nach einem der vorstehenden Ansprüche, bei dem im Kontaktbereich Vorsprünge auf den Kontaktelementen zur Verbesserung der Erosionsfestigkeit vorgesehen sind.

11. Schalter nach einem der vorstehenden Ansprüche, der als Lichtschalter für die Gebäudebeleuchtung ausgestaltet ist.

12. Beleuchtungsinstallation mit
mindestens zwei Verbrauchern (32, 33, 36, 37, 38, 45, 46)
von denen mindestens einer ein Beleuchtungsgerät (32, 33, 36, 37, 38, 46) ist und,
einem Schalter (30, 41, 42) nach einem der vorstehenden Ansprüche,
die dazu ausgelegt ist, mit dem Schalter (30, 41, 42) durch kurze Versorgungsleitungsunterbrechungen in Folge elastischer Auslenkung des elastisch gelagerten ersten Betätigungselements (4) zwischen den Verbrauchern (32, 33, 36, 37, 38, 45, 46) umzuschalten.

13. Beleuchtungsinstallation, auch nach Anspruch 12, mit mindestens einem Beleuchtungsgerät (31),
das in verschiedenen Dimmstufen betreibbar ist, und einem Schalter (30) nach einem der Ansprüche 1 - 11, die dazu ausgelegt ist, mit dem Schalter (30) durch kurze Versorgungsleitungsunterbrechungen in Folge elastischer Auslenkung des elastisch gelagerten ersten Betätigungselements (4) zwischen den Dimmstufen umzuschalten.

14. Beleuchtungsinstallation nach Anspruch 12 oder 13, bei der das Beleuchtungsgerät (32, 33, 36, 37, 38, 46) ein elektronisches Vorschaltgerät aufweist, in dem eine Erkennungsschaltung (34, 39, 40) zur Erkennung der kurzen Versorgungsleitungsunterbrechungen enthalten ist.

15. Beleuchtungsinstallation nach einem der Ansprüche 12 - 14, bei der eine spannungsführende Leitung, insbesondere Phasenleitung (L) unterbrochen wird.

## Claims

1. Switch for generating short-term supply-line interruptions during switching-on with contact elements (1, 2, 3, 5, 6, 21, 22, 23) and an actuating element (4) for opening and closing electrical contacts between the contact elements (1, 2, 3, 5, 6, 21, 22, 23), wherein a first contact element (1, 5, 21) is mounted elastically and, when a contact is closed via the first contact element (1, 5, 21), can be deflected elastically in such a way that the contact, after initial closing, is opened again by the elastic deflection, **characterized in that** the actuating element (4) can move a movable second contact element (2, 22), the second contact element (2, 22) can deflect the elastically mounted first contact element (1, 5, 21), and the first contact element (1, 5, 21), in the state in which it is not elastically deflected, makes contact with a third contact element (3, 6, 23), from which it can be moved away during the elastic deflection.

2. Switch according to Claim 1, in which the elastic restoring of the elastic mounting after opening by virtue of the elastic deflection closes the contact again.

3. Switch according to Claim 1 or 2, in which the actuating element (4) can be pressed in, via the elastically mounted first contact element (1, 5, 21), in order to close the contact and can be pressed in beyond a closing position, in which the contact is closed, as a result of which the first contact element (1, 5, 21) is deflected.

4. Switch according to Claim 2 or 3, in which the movable second contact element (22) can deflect the elastically mounted first contact element (21) and in the process slide past said first contact element (21), with the result that the first contact element (21) springs back elastically and closes the contact again before the second contact element (22) is moved back.

5. Switch according to Claim 4, in which the third contact element (3, 6, 23) is likewise mounted elastically in order to ensure bounce-free closing after the elastic springback.

6. Switch according to one of the preceding claims, in which at least one of the contact elements (1, 2, 5, 21, 22, 23) moves on an arcuate path.

7. Switch according to one of the preceding claims, at least Claims 1 or 2 and 6, in which the movable second contact element (2, 22) is a rocker.

8. Switch according to one of the preceding claims, in which the elastically mounted first contact element (21) is a spring metal sheet, and the elastic mounting follows from the elastic properties of the spring metal sheet.

9. Switch according to one of the preceding claims, at least Claims 1 or 2 and 8, in which the movable second contact element (22) and the elastically mounted first contact element (21) are each metal sheet pieces.

10. Switch according to one of the preceding claims, in which projections are provided on the contact elements in order to improve the erosion resistance in the contact region.

11. Switch according to one of the preceding claims, which is configured as a light switch for building lighting.

12. Lighting installation with
at least two loads (32, 33, 36, 37, 38, 45, 46) of which at least one is a lighting device (32, 33, 36, 37, 38, 46), and
a switch (30, 41, 42) according to one of the preceding claims, which lighting installation is designed to switch over between the loads (32, 33, 36, 37, 38, 45, 46) by means of the switch (30, 41, 42) by virtue of short-term supply-line interruptions as a result of elastic deflection of the elastically mounted first actuating element (4).

13. Lighting installation, also according to Claim 12, with at least one lighting device (31), which can be operated at different dimming levels, and with a switch (30) according to one of Claims 1-11,
which lighting installation is designed to switch over between the dimming levels by means of the switch (30) by virtue of short-term supply-line interruptions as a result of elastic deflection of the elastically mounted first actuating element (4).

14. Lighting installation according to Claim 12 or 13, in which the lighting device (32, 33, 36, 37, 38, 46) has an electronic ballast, which contains an identification circuit (34, 39, 40) for identifying the short-term supply-line interruptions.

15. Lighting installation according to one of Claims 12-14, in which a live line, in particular a phase line (L) is interrupted.

## Revendications

1. Commutateur destiné à générer de courtes interruptions de ligne d'alimentation lors de la mise sous tension, muni d'éléments de contact (1, 2, 3, 5, 6, 21, 22, 23) et d'un élément de commande (4) pour ouvrir et fermer des contacts électriques entre les éléments de contact (1, 2, 3, 5, 6, 21, 22, 23), un premier élément de contact (1, 5, 21) étant logé de manière élastique et pouvant être dévié élastiquement lors de la fermeture d'un contact par l'intermédiaire du premier élément de contact (1, 5, 21) de manière à ce que le contact, après la fermeture initiale, soit de nouveau ouvert en raison de la déviation élastique, **caractérisé en ce que** l'élément de commande (4) peut déplacer un deuxième élément de contact mobile (2, 22), **en ce que** le deuxième élément de contact (2, 22) peut dévier le premier élément de contact (1, 5, 21) logé de manière élastique et **en ce que** le premier élément de contact (1, 5, 21), à l'état dévié de manière non élastique, est en contact avec un troisième élément de contact (3, 6, 21), duquel il peut être éloigné lors de la déviation élastique.

2. Commutateur selon la revendication 1, dans lequel la remise élastique à l'état initial du logement élastique après l'ouverture ferme de nouveau le contact en raison de la déviation élastique.

3. Commutateur selon la revendication 1 ou 2, dans lequel l'élément de commande (4), pour fermer le contact, peut être enfoncé par l'intermédiaire du premier élément de contact (1, 5, 21) logé de manière élastique et peut être enfoncé au-delà par l'intermédiaire d'une position de fermeture, dans laquelle le contact est fermé, sur quoi le premier élément de contact (1, 5, 21) est dévié.

4. Commutateur selon la revendication 2 ou 3, dans lequel le deuxième élément de contact mobile (22) peut dévier le premier élément de contact (21) logé de manière élastique et, ce faisant, peut glisser en passant devant celui-ci, de sorte que le premier élément de contact (21) saute en arrière de manière élastique et ferme de nouveau le contact avant que le deuxième élément de contact (22) ne soit déplacé en retour.

5. Commutateur selon la revendication 4, dans lequel le troisième élément de contact (3, 6, 23) est également logé de manière élastique afin de garantir une fermeture exempte de rebondissement après le saut en arrière élastique.

6. Commutateur selon l'une quelconque des revendications précédentes, dans lequel au moins un des éléments de contact (1, 2, 5, 21, 22, 23) se déplace sur une voie en courbe.

7. Commutateur selon l'une quelconque des revendications précédentes, au moins selon la revendication 1 ou 2 et la revendication 6, dans lequel le deuxième élément de contact mobile (2, 22) est une bascule.

8. Commutateur selon l'une quelconque des revendications précédentes, dans lequel le premier élément de contact (21) logé de manière élastique est une tôle élastique à ressort et en ce que le logement élastique résulte des propriétés élastiques de la tôle élastique à ressort.

9. Commutateur selon l'une quelconque des revendications précédentes, au moins selon la revendication 1 ou 2 et la revendication 8, dans lequel le deuxième élément de contact mobile (22) et le premier élément de contact (21) logé de manière élastique sont respectivement des morceaux de tôle.

10. Commutateur selon l'une quelconque des revendications précédentes, dans lequel des saillies sont ménagées dans la zone de contact sur les éléments de contact pour améliorer la résistance à l'érosion.

11. Commutateur selon l'une quelconque des revendications précédentes, qui est réalisé comme commutateur d'éclairage pour l'éclairage de bâtiments.

12. Installation d'éclairage comprenant
au moins deux consommateurs (32, 33, 36, 37, 38, 45, 46) dont au moins un est un appareil d'éclairage (32, 33, 36, 37, 38, 46) et
un commutateur (30, 41, 42) selon l'une quelconque des revendications précédentes,
laquelle est conçue pour commuter entre les consommateurs (32, 33, 36, 37, 38, 45, 46) à l'aide du commutateur (30, 41, 42) par de courtes interruption de ligne d'alimentation suite à une déviation élastique du premier élément de commande (4) logé de manière élastique.

13. Installation d'éclairage, également selon la revendication 12, comprenant au moins un appareil d'éclairage (31) pouvant fonctionner dans différents grades de luminosité, et un commutateur (30) selon l'une quelconque des revendications 1 à 11, laquelle est conçue pour commuter entre les grades de luminosité à l'aide du commutateur (30) par de courtes interruptions de ligne d'alimentation suite à une déviation élastique du premier élément de commande (4) logé de manière élastique.

14. Installation d'éclairage selon la revendication 12 ou 13, dans laquelle l'appareil d'éclairage (32, 33, 36, 37, 38, 46) présente un ballast électronique dans lequel est contenu un circuit d'identification (34, 39, 40) destiné à identifier les courtes interruptions de ligne d'alimentation.

15. Installation d'éclairage selon l'une quelconque des revendications 12 à 14, dans laquelle une ligne conductrice de tension, notamment la ligne de phase (L), est interrompue.
